(19) Europäisches Patentamt / European Patent Office / Office européen des brevets

(11) **EP 4 697 721 A1**

(12) **EUROPEAN PATENT APPLICATION**
published in accordance with Art. 153(4) EPC

(43) Date of publication:
**18.02.2026  Bulletin 2026/08**

(21) Application number: **24807381.9**

(22) Date of filing: **18.04.2024**

(51) International Patent Classification (IPC):
*H04N 19/59* (2014.01)    *H04N 19/593* (2014.01)
*H04N 19/105* (2014.01)    *H04N 19/117* (2014.01)
*H04N 19/176* (2014.01)    *H04N 19/132* (2014.01)
*H04N 19/196* (2014.01)    *H04N 19/11* (2014.01)
*H04N 19/12* (2014.01)    *H04N 19/70* (2014.01)

(52) Cooperative Patent Classification (CPC):
**H04N 19/105; H04N 19/11; H04N 19/117;
H04N 19/12; H04N 19/132; H04N 19/176;
H04N 19/196; H04N 19/59; H04N 19/593;
H04N 19/70**

(86) International application number:
**PCT/KR2024/005216**

(87) International publication number:
**WO 2024/237502 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **16.05.2023  KR 20230063334
16.04.2024  KR 20240051001**

(71) Applicants:
• **Hyundai Motor Company
Seoul 06797 (KR)**
• **Kia Corporation
Seoul 06797 (KR)**
• **Kwangwoon University
Industry-Academic Collaboration Foundation
Seoul 01897 (KR)**

(72) Inventors:
• **BYEON, Joo Hyung
Seoul 08269 (KR)**
• **LEE, Min Hun
Uijeongbu-si Gyeonggi-do 11688 (KR)**
• **SIM, Dong Gyu
Seoul 01901 (KR)**
• **CHOI, Jung Ah
Seoul 05338 (KR)**
• **HEO, Jin
Yongin-si Gyeonggi-do 16836 (KR)**
• **PARK, Seung Wook
Yongin-si Gyeonggi-do 16847 (KR)**

(74) Representative: **Isarpatent
Patent- und Rechtsanwälte Partg mbB
Friedrichstraße 31
80801 München (DE)**

(54) **METHOD FOR EXTRAPOLATION-BASED INTRA PREDICTION**

(57)    A method and an apparatus are disclosed for video coding using an extrapolation-based intra prediction. In the disclosed embodiments, the video decoding apparatus determines a reference sample region used for deriving filter coefficients. Here, the reference sample region includes reconstructed reference samples of the current block. The video decoding apparatus determines a filter shape used for an extrapolation-based intra prediction. Here, the filter shape is rectangular and includes a prediction pixel region and an input pixel region. The video decoding apparatus derives the filter coefficients based on the reference sample region and the filter shape. The video decoding apparatus generates a prediction block of the current block by applying the derived filter coefficients to the reconstructed reference samples of the current block and predicted samples.

EP 4 697 721 A1

908

1002      1004      1006      1008

Parsed Encoding Information → | Reference Sample Region Determiner | → | Filter Shape Determiner | → | Filter Coefficient Determiner | → | Extrapolation Performer | → Predicted Samples

# FIG. 10

## Description

[Technical Field]

The present disclosure relates to a video coding method and an apparatus using an extrapolation-based intra prediction.

[Background]

The statements in this section merely provide background information related to the present disclosure and do not necessarily constitute prior art.

Since video data has a large amount of data compared to audio or still image data, the video data requires a lot of hardware resources, including a memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/Advanced Video Coding (AVC), High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

In the next-generation technique, enhanced compression model (ECM), an extrapolation-based intra prediction mode (EIP mode) uses an extrapolation filter to perform intra prediction based on neighboring pre-reconstructed reference samples. The EIP mode uses the reconstructed reference samples and predicted samples as inputs, performing extrapolation sequentially one pixel at a time. Here, the region of reference samples and the shape of the extrapolation filter are determined by explicit signaling.

During the extrapolation filter-based intra prediction, the EIP mode may use reconstructed reference samples alone as input to generate predicted samples. Alternatively, the EIP mode may generate predicted samples by using the reconstructed reference samples and predicted signals as inputs, or using the predicted signals alone as input. In EIP mode, the extrapolation filter uses a single filtering operation to generate a single predicted sample from the input samples.

Therefore, to increase video coding efficiency and enhance video quality, there is a need for an efficient method of utilizing the reconstructed reference samples and predicted signals during extrapolation filter-based intra prediction.

[Disclosure]

[Technical Problem]

The present disclosure seeks to provide a video coding method and an apparatus that use an extrapolation filter to effectively intra-predict a current sample from reconstructed reference samples and predicted samples.

[Technical Solution]

At least one aspect of the present disclosure provides a method for reconstructing a current block by a video decoding apparatus. The method includes determining a reference sample region used for deriving filter coefficients. Here, the reference sample region includes reconstructed reference samples of the current block. The method also includes determining a filter shape used for an extrapolation-based intra prediction. Here, the filter shape is rectangular and includes a prediction pixel region and an input pixel region. The method also includes deriving the filter coefficients based on the reference sample region and the filter shape. The method also includes generating a prediction block of the current block by applying the derived filter coefficients to the reconstructed reference samples of the current block and predicted samples.

Another aspect of the present disclosure provides a method for encoding a current block by a video encoding apparatus. The method includes determining a reference sample region used for deriving filter coefficients. Here, the reference sample region includes reconstructed reference samples of the current block. The method also includes determining a filter shape used for an extrapolation-based intra prediction. Here, the filter shape is rectangular and includes a prediction pixel region and an input pixel region. The method also includes deriving the filter coefficients based on the reference sample region and the filter shape. The method also includes generating a first prediction block of the current block by applying the derived filter coefficients to the reconstructed reference samples of the current block and predicted samples.

Yet another aspect of the present disclosure provides a method for providing video data to a video decoding apparatus. The method includes encoding the video data into a bitstream, and transmitting the bitstream to the video decoding apparatus. The encoding of the video data includes determining a reference sample region used for deriving filter coefficients. Here, the reference sample region includes reconstructed reference samples of a current block. The encoding of the video data also includes determining a filter shape used for an extrapolation-based intra prediction. Here, the filter shape being rectangular and includes a prediction pixel region and an input pixel region. The encoding of the video data also includes deriving the filter coefficients based on the reference sample region and the filter shape. The encoding of the video data also includes generating a prediction block of the current block by applying the derived filter coefficients to the reconstructed reference samples of the current block and predicted samples.

[Advantageous Effects]

As described above, the present disclosure provides a video coding method and an apparatus that use an extrapolation filter to effectively intra-predict a current sample from reconstructed reference samples and predicted samples. Thus, the video coding method and the apparatus increase video coding efficiency and enhance video quality.

[Brief Description of the Drawings]

FIG. 1 is a block diagram of a video encoding apparatus that may implement the techniques of the present disclosure.
FIG. 2 illustrates a method for partitioning a block using a quadtree plus binarytree ternarytree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIG. 6 is a diagram illustrating reconstructed regions used for extrapolation-based intra prediction.
FIG. 7 is a diagram illustrating shapes of extrapolation filters.
FIG. 8 is a diagram illustrating an extrapolation-based intra prediction in progress.
FIG. 9 is a block diagram showing in detail a part of a video decoding apparatus according to at least one embodiment of the present disclosure.
FIG. 10 is a block diagram detailing a prediction performer according to at least one embodiment of the present disclosure.
FIGS. 11A to 11C are diagrams illustrating reference sample regions used for deriving filter coefficients, according some embodiments of the present disclosure.
FIG. 12 is a diagram illustrating a filter shape according to at least one embodiment of the present disclosure.
FIG. 13 is a diagram illustrating the prediction order of pixels, according to at least one embodiment of the present disclosure.
FIGS. 14 to 16 are diagrams illustrating the prediction orders of pixels according to other embodiments of the present disclosure.
FIG. 17 is a diagram illustrating a filter shape according to at least one embodiment of the present disclosure.
FIG. 18 is a flowchart of a method of encoding the current block by a video encoding apparatus, according to at least one embodiment of the present disclosure.
FIG. 19 is a flowchart of a method of reconstructing the current block by a video decoding apparatus, according to at least one embodiment of the present disclosure.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

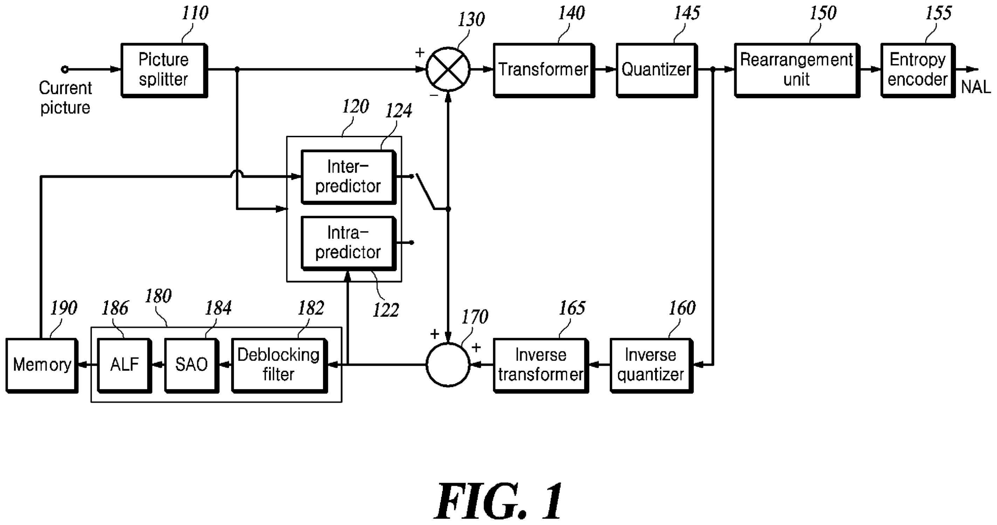

FIG. 1 is a block diagram of a video encoding apparatus that may implement technologies of the present disclosure. Hereinafter, referring to illustration of FIG. 1, the video encoding apparatus and components of the apparatus are described.
The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.
Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternarytree (TT) in which the higher node is split into three lower nodes at a ratio of 1:2:1. The tree structure may also be a structure in which two or more structures among the QT structure, the BT structure, and the TT structure are mixed. For example, a quadtree plus binary tree (QTBT) structure may be used or a quadtree plus binary tree ternary tree (QTBTTT) structure may be used. Here, a binary tree ternary tree (BTTT) is added to the tree structures to be referred to as a multiple-type tree (MTT).

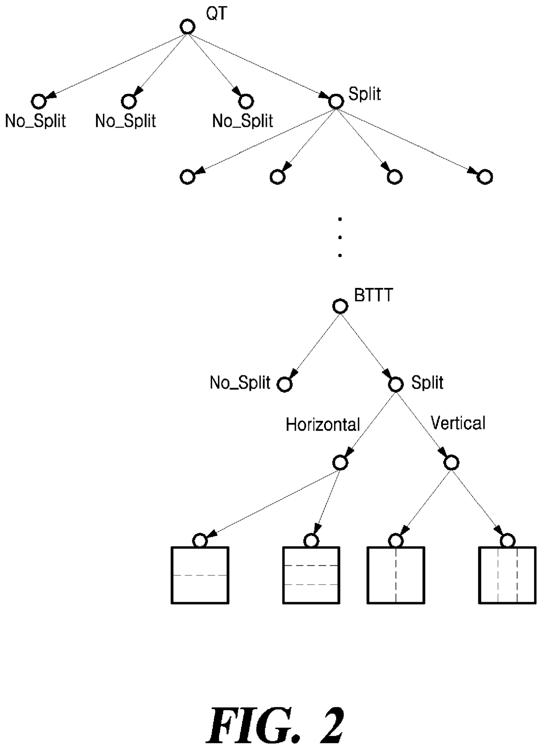

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block).

The inter prediction includes both unidirectional prediction and bidirectional prediction.

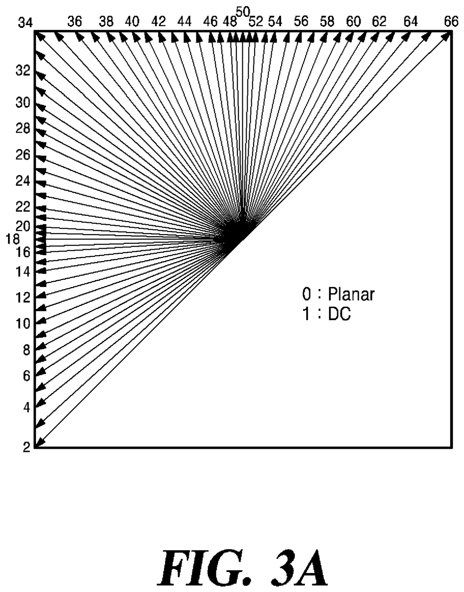

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 nondirectional modes including a Planar mode and a DC mode and may include 65 directional modes. A neighboring pixel and an arithmetic equation to be used are defined differently according to each prediction mode.

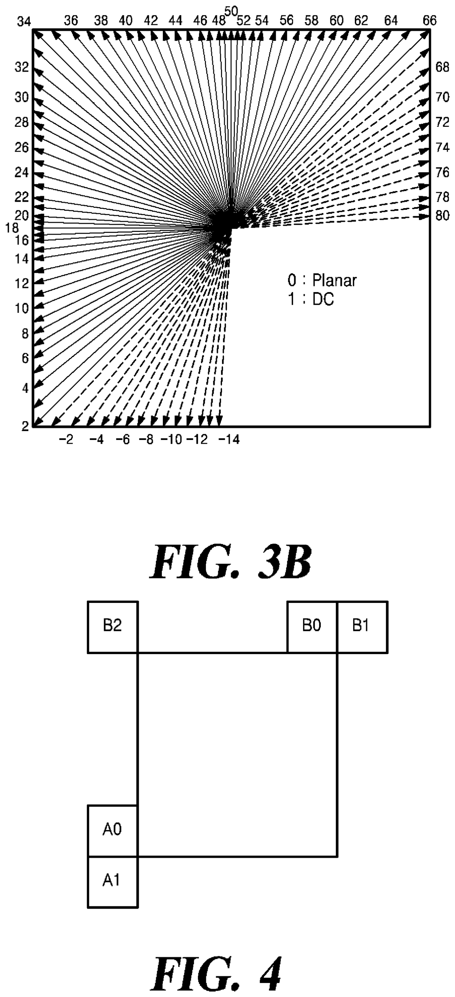

For efficient directional prediction for the current block having a rectangular shape, directional modes (intra prediction modes #67 to #80, #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current block in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

The video encoding device may store a bitstream of encoded video data in a non-transitory storage medium or transmit the bitstream to the video decoding device through a communication network.

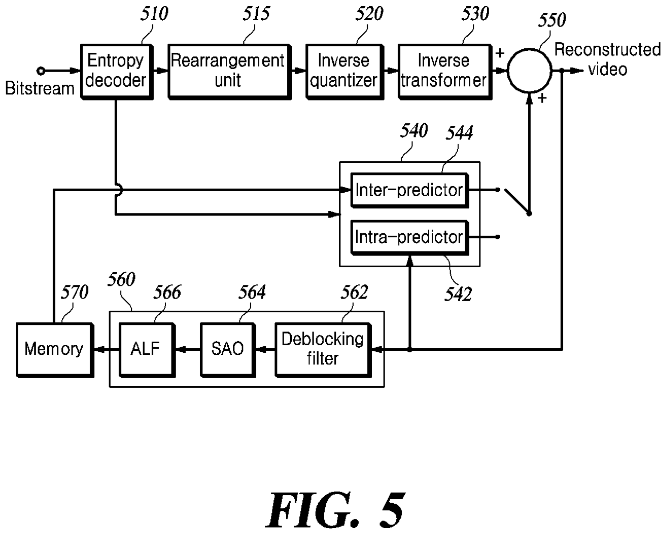

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform function or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510, and predicts the current block by using the motion vector and the reference picture.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

The present disclosure in some embodiments relates to encoding and decoding video images as described above. More specifically, the present disclosure provides a video coding method and an apparatus apparatuses that use an extrapolation filter to effectively intra-predict the current sample from reconstructed reference samples and predicted samples.

The following embodiments may be performed by the intra predictor 122 in the video encoding device. The following embodiments may also be performed by the intra predictor 542 in the video decoding device.

The video encoding device in encoding the current block may generate signaling information associated with the present embodiments in terms of optimizing rate distortion. The video encoding device may use the entropy encoder 155 to encode the signaling information and transmit the encoded signaling information to the video decoding device. The video decoding device may use the entropy decoder 510 to decode, from the bitstream, the signaling information associated with the decoding of the current block.

In the following description, the term "target block" may be used interchangeably with the current block or coding unit (CU), or may refer to some area of a coding unit.

Further, the value of one flag being true indicates when the flag is set to 1. Additionally, the value of one flag being false indicates when the flag is set to 0.

## I. Extrapolation-based Intra Prediction (EIP)

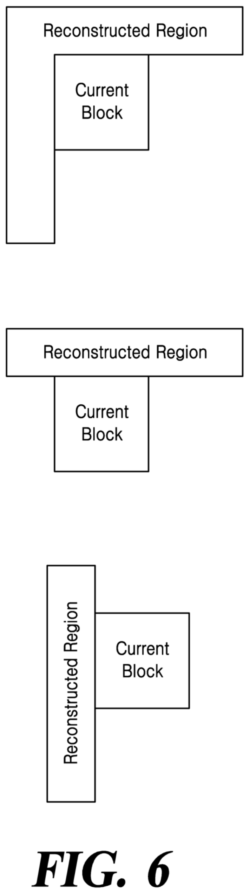

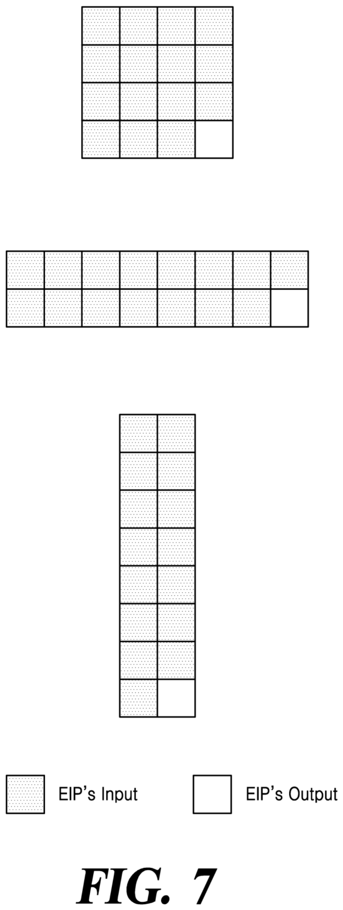

In the next-generation technique, enhanced compression model (ECM), an extrapolation-based intra prediction mode (EIP mode) performs intra prediction by using an extrapolation filter based on neighboring pre-reconstructed reference samples. The EIP mode uses reconstructed reference samples and predicted samples as inputs, performing extrapolation sequentially one pixel at a time. The reference sample regions used for deriving extrapolation filter coefficients are illustrated in FIG. 6, and the shapes of extrapolation filters used for prediction are illustrated in FIG. 7.

Here, the region of reference samples and the shape of extrapolation filters are determined by explicit signaling.

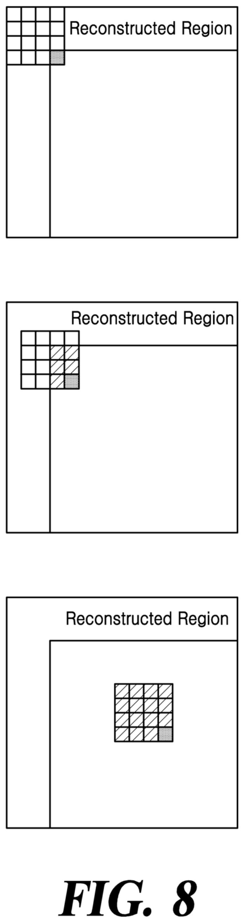

As illustrated in FIG. 8, intra prediction may be performed based on an extrapolation filter. For example, the EIP mode generates predicted samples by using the reconstructed reference samples as input exclusively. Alternatively, the EIP mode may generate predicted samples by using either the reconstructed reference samples and predicted signals as input, or using only the predicted signals as input. In the EIP mode, the extrapolation filter generates a single predicted sample from the input samples by using a single filtering operation.

The following embodiments are described with a focus on the video decoding apparatus, but they may be implemented in the same or similar manner in the video encoding apparatus.

## II. Embodiments According to the Present Disclosure

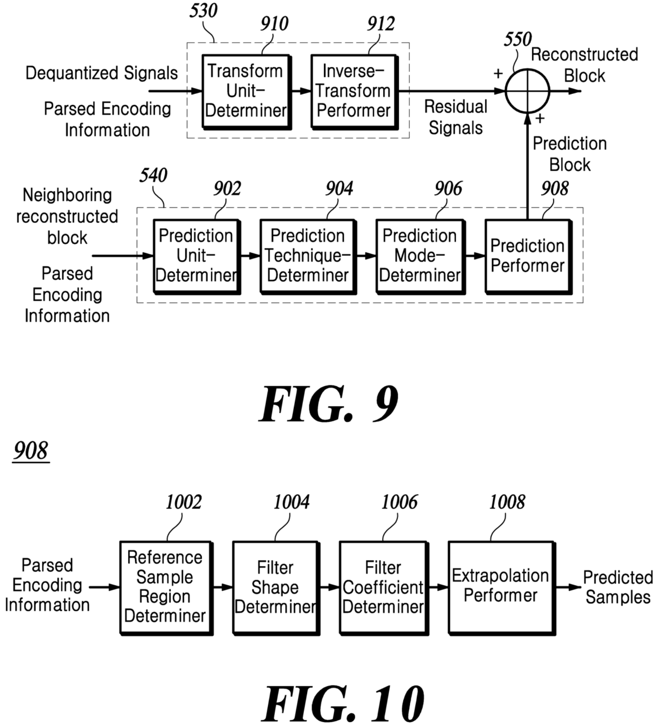

The video decoding apparatus according to some embodiments may determine prediction and transform units, and in response to a current block corresponding to the determined unit, may perform a prediction and an inverse transform by using a determined prediction technique and prediction mode, to finally generate a reconstructed block of the current block. The operations illustrated in FIG. 9 may be performed by the inverse transformer 530, the predictor 540, and the adder 550 of the video decoding apparatus. On the other hand, the same operations as illustrated in FIG. 9 may be performed by the inverse transformer 165, the picture splitter 110, the predictor 120, and the adder 170 of the video encoding apparatus. In this case, the video decoding apparatus uses encoding information parsed from the bitstream, but the video encoding apparatus may use encoding information set from a high level in terms of minimizing bit rate distortion. Hereinafter, for convenience, the embodiments are described centering on the video decoding apparatus.

As illustrated in FIG. 5, the predictor 540 includes the intra predictor 542 and the inter predictor 544, depending on the prediction technique, but as illustrated in FIG. 9, the predictor 540 may include all or part of a prediction unit-determiner 902, a prediction technique-determiner 904, a prediction mode-determiner 906, and a prediction performer 908.

When the color format of the input video is a YUV format (YUV420, YUV411, YUV422, YUV444, or the like), the video decoding apparatus may perform prediction and reconstruction of the luma component, and then may perform prediction and reconstruction of the chroma component. In this way, the luma component and the chroma component may be sequentially reconstructed by the components illustrated in FIG. 9. On the other hand, when the color format of the input video is RGB, the video encoding apparatus may perform a color format conversion from RGB to YUV, and then may encode the converted video. Here, in the YUV format, the color format represents a correspondence between pixels in the luma component and pixels in the chroma component.

The prediction unit-determiner 902 determines a prediction unit (PU). The prediction technique-determiner 904, in response to the prediction unit, determines a prediction technique, e.g., intra prediction, inter prediction, or intra block copy (IBC) mode, palette mode, or the like. The prediction mode-determiner 906 determines a detailed prediction mode for the prediction technique. The prediction performer 908 generates a prediction block of the current block according to the determined prediction mode.

The inverse transformer 530 includes a transform unit-determiner 910 and an inverse transform-performer 912. The transform unit-determiner 910 determines a transform unit (TU) in response to the dequantized signals of the current block, and the inverse transform-performer 912 inversely transforms the transform unit represented by the dequantized signals to generate residual signals.

The adder 550 sums the prediction block and the residual signals to generate a reconstructed block. The reconstructed block is stored in memory and may be used for predicting other blocks in the future.

The prediction unit determined by the prediction unit-determiner 902 may become the current block or one subblock of the subblocks split from the current block. In this case, the prediction unit of the chroma component may correspond in size to the prediction unit of the luma component, depending on the color format. Alternatively, the prediction units of the luma component and the chroma component may be determined separately, and the prediction may be performed in response to the prediction unit of the chroma component.

The prediction technique-determiner 904 determines a prediction technique for the prediction units. As described above, the prediction technique may be one of inter prediction, intra prediction, IBC mode, and palette mode. In this case, the prediction technique for the chroma component may be determined to be the same as the prediction technique of the corresponding luma component without signaling and parsing any additional information.

In one example, when the prediction technique of the current block is not intra prediction, the video decoding apparatus parses the 1-bit flag information. When the parsed flag indicates a skip mode, the video decoding apparatus may determine the prediction mode of the current block to be an inter prediction merge mode or an IBC merge mode. In the skip mode, the video decoding apparatus may also use the predicted signals in place of reconstructed signals, while skipping an inverse transform, i.e., without parsing residual signals.

On the other hand, when the parsed flag does not indicate a skip mode in response to the current block, the prediction technique-determiner 904 may determine one of the prediction techniques, such as inter prediction, intra prediction, IBC mode, palette mode, or the like, by parsing a series of 1-bit flags to be the prediction technique of the current block.

For example, when skip mode is not applied to the current block and the inter prediction or IBC mode is determined to be the prediction technique, the video decoding apparatus parses a 1-bit flag. The video decoding apparatus may determine, based on the parsed flag, the prediction mode of the current block to be the regular merge mode or AMVP (advanced motion vector prediction) mode.

The prediction mode-determiner 906 determines a detailed prediction mode for the prediction technique.

As an example, when the prediction technique for the current block is intra prediction, the prediction mode-determiner 906 may determine a single directional prediction mode, a planar mode (horizontal planar, vertical planar, or regular planar), or a DC mode as the prediction mode of the current block.

As another example, when the prediction technique for the current block is intra prediction, the prediction mode-determiner 906 may determine the prediction mode of the current block to be a mode that performs prediction based on a predefined matrix. The prediction mode-determiner 906 may calculate a gradient based on the reconstructed reference sample and use the calculated gradient to determine the prediction mode of the current block to be a mode that derives the intra-prediction mode. The prediction mode-determiner 906 may perform intra prediction based on reference samples and then calculate the cost to determine the intra-prediction mode of the current block to be a mode that derives the prediction mode with the minimum cost. Here, metrics such as Sum of Absolute Differences (SAD) or Sum of Absolute Transformed Differences (SATD) may be used as the cost. Alternatively, the prediction mode-determiner 906 may use the reference sample region to determine the prediction mode of the current block to be a mode that derives the position of the reference sample line and the prediction modes combined to be used for intra prediction based on cost (SAD or SATD). In this case, the selection of which mode to use among the above-described prediction modes may be explicitly determined based on a flag. The signaling order of the flags for the respective ones of the prediction modes may vary depending on embodiments. In this case, the video decoding apparatus may additionally parse a flag indicating whether extrapolation-based intra prediction is to be performed to determine whether to perform extrapolation-based intra prediction.

For example, when the current block's aspect ratio (W/H) is greater than or less than a specific threshold, extrapolation-based intra prediction may not be performed. Here, W and H represent the width and height of the current block, respectively. When W $\times$ H is greater than or less than a specific threshold, extrapolation-based intra prediction may not be performed. Alternatively, extrapolation-based intra prediction may not be performed depending on factors such as the intra-prediction mode of some or all blocks containing reference samples, or whether the reference sample region is used. In the above-described cases, when extrapolation-based intra prediction is not performed, the video decoding apparatus may omit parsing the flag indicating whether extrapolation-based intra prediction is to be performed.

The prediction performer 908 generates the prediction block of the current block according to the determined prediction technique and prediction mode.

For example, the prediction performer 908 generates the prediction block of the current block according to the prediction mode, and the adder 550 sums the prediction block of the current block and the residual signals to generate the reconstructed block.

FIG. 10 is a block diagram showing in detail a prediction performer according to at least one embodiment of the present disclosure.

For cross-component prediction, the prediction performer 908 includes, as illustrated in FIG. 10, a reference sample region determiner 1002, a filter shape determiner 1004, a filter coefficient determiner 1006, and an extrapolation performer 1008.

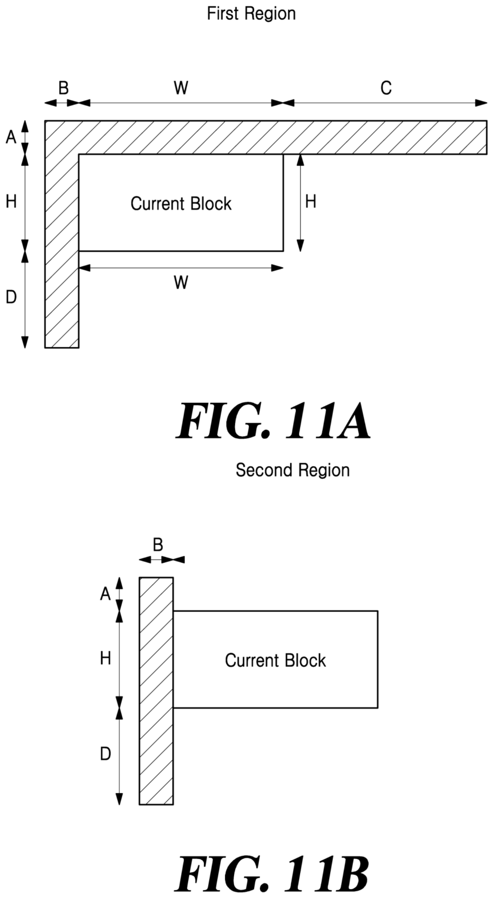

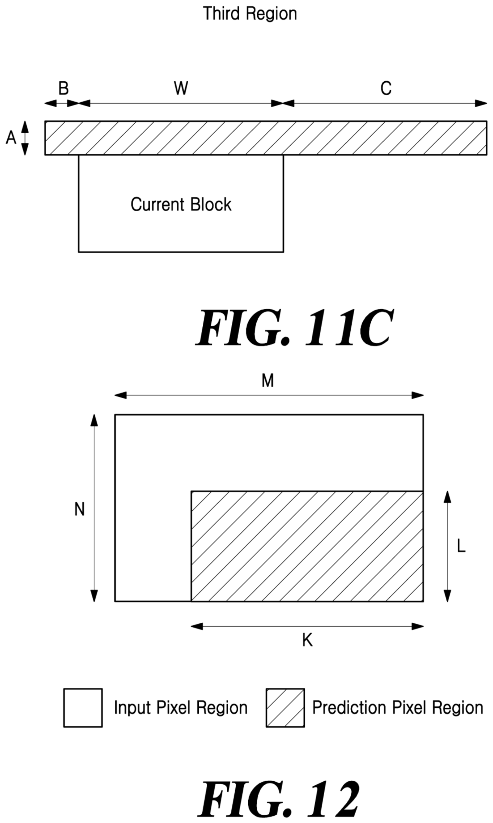

The reference sample region determiner 1002 explicitly parses the reference sample region to be used for deriving filter coefficients when performing extrapolation-based intra prediction by deriving the filter coefficients based on reconstructed reference samples. As illustrated in FIGS. 11A to 11C, the video decoding apparatus uses as the reference sample region the current block's left and top sides (first region), the current block's left side (second region), or the current block's top side (third region). The video decoding apparatus parses information indicating one of the first to third regions to determine the reference sample region. In the illustrations of FIGS. 11A to 11C, A, B, C, and D are integer values greater than or equal to zero and may be defined according to an agreement between the video encoding apparatus and the video decoding apparatus.

When reference samples are not available for use at specific locations relative to the current block, the video decoding apparatus derives the filter coefficients excluding the relevant region. Alternatively, the video decoding apparatus may use reference samples that include samples generated by padding the specific locations, to derive the filter coefficients.

As one example, when using a specific reference sample region exclusively based on an agreement between the video encoding apparatus and the video decoding apparatus, the video decoding apparatus may skip additional parsing and may determine that specific region as the reference sample region for deriving filter coefficients.

In another example, when using filter coefficients defined according to an agreement between the video encoding apparatus and the video decoding apparatus for extrapolation-based intra prediction, the operation of the reference sample region determiner 1002 may be omitted.

The filter shape determiner 1004 determines the filter shape for performing extrapolation-based intra prediction. The filter shape determiner 1004 determines M, N, K, and L which are natural numbers, as illustrated in FIG. 12. In the example of FIG. 12, the rectangular shape K×L represents the size of the prediction pixel region, and M×N-K×L represents the size of the input pixel region. Furthermore, M≥K and N≥L.

As an example, the video decoding apparatus may explicitly parse one of a number T of filter shapes defined according to an agreement between the video encoding apparatus and the video decoding apparatus. Here, T represents an arbitrary positive integer greater than 0. Among the T filters, each filter has different values for one or more of M, N, K, and L.

For example, the reference sample region and the filter shape combined for use in filter derivation may be defined according to an agreement between the video encoding apparatus and the video decoding apparatus. The video decoding apparatus may parse an index indicating one such combination and take the parsed index to determine the reference sample region and the filter shape.

For example, the video decoding apparatus derives for each of T filter shapes, filter coefficients from the reconstructed reference sample region, and then generates predicted signals of the current block, which correspond to the respective one of the filter shapes and filter coefficients. Here, the filter coefficients are calculated by the filter coefficient determiner 1006, and the predicted signals of the current block may be generated by the extrapolation performer 1008. The video decoding apparatus may calculate the cost (e.g., Sum of Absolute Differences or SAD) between the predicted signals of the current block and the reconstructed reference samples of the current block, and determine the filter shape with the minimum calculated cost for predicting the current block. The region where to calculate the cost between the predicted signals and the reconstruction values may be the same as the region determined by the reference sample region determiner 1002. Alternatively, the region for calculating the cost may be a specific region (e.g., the first region illustrated in FIG. 11A) defined according to an agreement between the video encoding apparatus and the video decoding apparatus.

For example, the filter shape may be determined based on one or more of the size of the current block, the aspect ratio of the current block, a prior agreement between the video encoding apparatus and the video decoding apparatus, and explicit signaling.

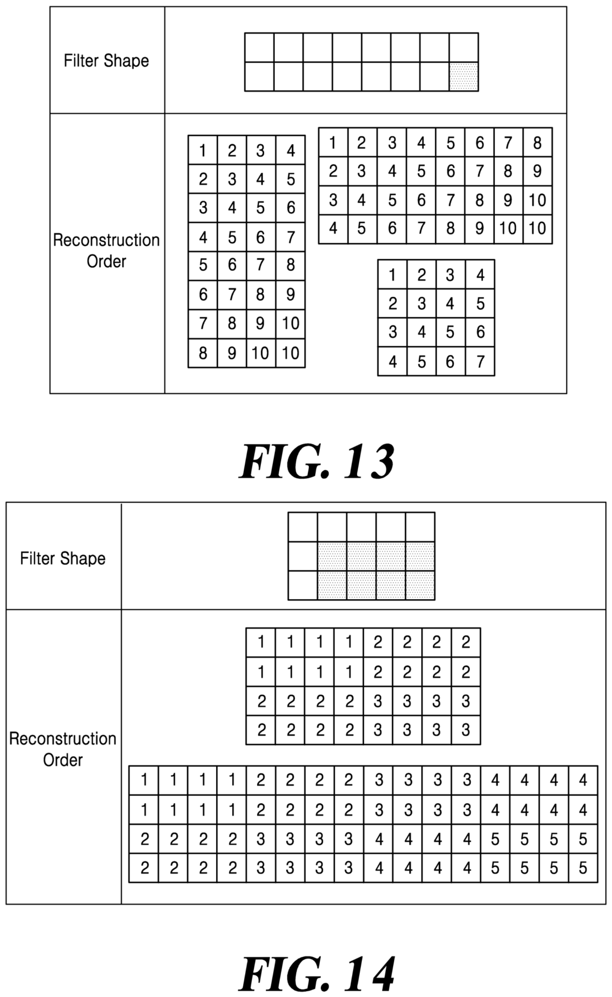

Extrapolation-based intra prediction uses previous predicted samples as input, thereby inducing dependencies. For example, when K=L=1, the video decoding apparatus performs prediction in the order illustrated in FIG. 13. In the example of FIG. 13, pixels with the same reconstruction order represent pixels that can be predicted in parallel based on the dependencies.

The number of pipelines based on the above-described dependencies is determined by the number of pixels (K×L) outputted by the extrapolation prediction. When the same number of predicted pixels is applied, the number of pipelines may be determined based on the aspect ratio (W/H) of the current block and the aspect ratio (K/L) of the outputted predicted pixels.

To limit the maximum number of pipelines based on dependencies, the values of K and L may be determined. In this case, K and L may be determined based on the width, height, and aspect ratio of the current block as follows.

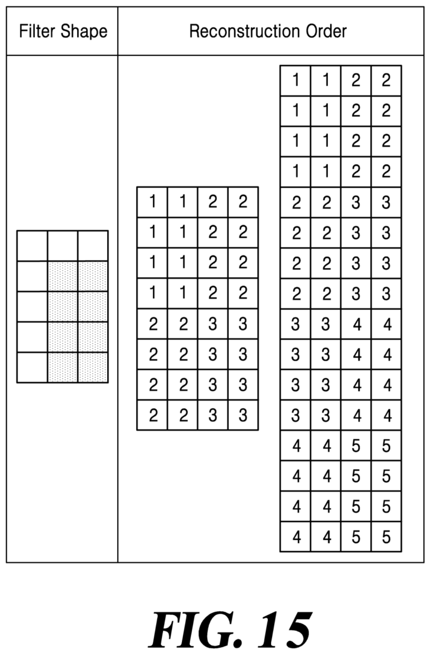

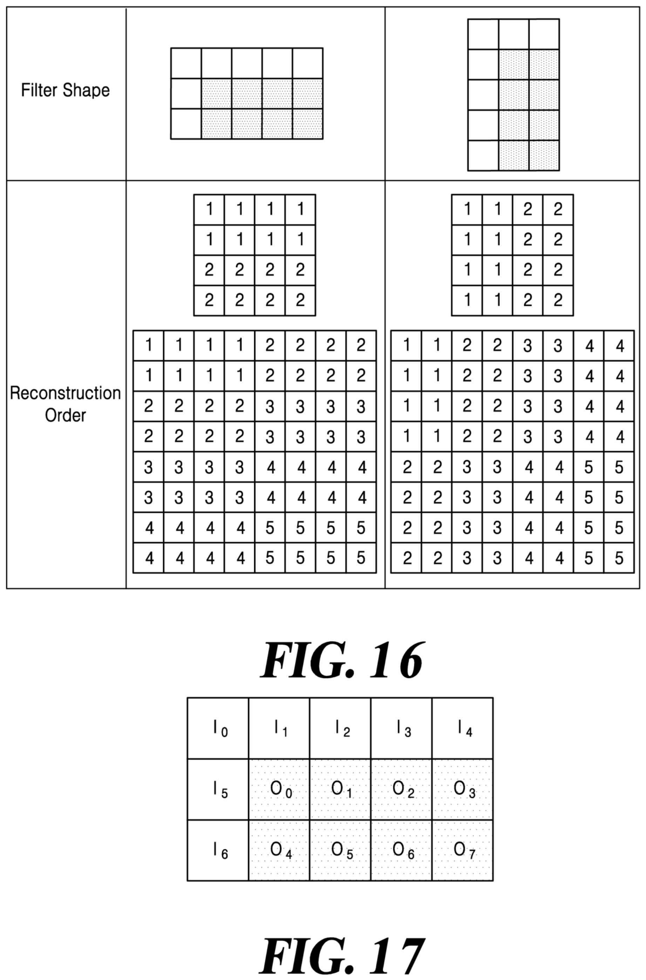

When the current block has its aspect ratio greater than 1, the first filter shape ((K/L) > 1) is determined. When the aspect ratio of the current block is less than 1, the second filter shape ((K/L) < 1) is determined. When the aspect ratio of the current block is 1, a specific filter shape may be determined as defined by agreement between the video encoding apparatus and the video decoding apparatus to be either the first filter shape or the second filter shape, or the filter shape may be determined explicitly based on a flag. As illustrated in FIG. 14, the video decoding apparatus may predict blocks with an aspect ratio greater than 1 by using the first filter shape. As illustrated in FIG. 15, the video decoding apparatus may predict blocks with an aspect ratio less than 1 by using the second filter shape. As illustrated in FIG. 16, the video decoding apparatus may predict blocks with an aspect ratio of 1 by using either the first filter shape or the second filter shape.

As one example, when the current block's aspect ratio is 1, the video decoding apparatus may predict the current block by using a separate filter shape where K=L.

For example, to a block that is subject to extrapolation-based intra prediction, the video decoding apparatus may use, depending on the block size, a specific filter shape defined based on the agreement between the video encoding apparatus and the video decoding apparatus. Alternatively, the video decoding apparatus may define a list of candidate filter shapes based on the block size and then explicitly determine the filter shape to use for prediction. Namely, the video decoding apparatus may parse an index indicating one filter shape candidate and then may use the parsed index to determine the filter shape from the list of candidate filter shapes.

The filter coefficient determiner 1006 derives the filter coefficients to be used for prediction based on the reference sample region and the filter shape. For example, when using filter coefficients defined for extrapolation-based intra prediction based on agreement between the video encoding apparatus and the video decoding apparatus, the present disclosure may skip the filter coefficient derivation process by the filter coefficient determiner 1006. The video decoding apparatus may parse an index indicating the filter coefficients and then may take the parsed index to determine the filter coefficients to be used for prediction.

The filter coefficients may be derived by the common method in the video encoding apparatus and video decoding apparatus. For example, the video decoding apparatus derives the filter coefficients which cause the least cost, e.g., SAD, mean square error (MSE), or the like between the reconstructed reference samples and values generated by multiplying the filter coefficients by the reconstructed reference samples defined according to the filter shape in the reference sample region. When the filter shape is as illustrated in FIG. 17, to generate the predicted signals $O_0$ to $O_7$ at their respective positions from the $1 \times 7$ ($I_0$ to $I_6$) reconstructed reference samples, the video decoding apparatus derives a $7 \times 8$ filter matrix. For example, to derive the above-described filter matrix, the video decoding apparatus may derive the filter coefficients $C_0$ to $C_6$ at the respective prediction positions from a least square (LS) optimization perspective. For the filter shape of FIG. 9, the filter coefficients for generating the prediction value at the i-th output position may be defined by Equation 1.

【Equation 1】

$$
\begin{bmatrix} I_{0,0} & I_{1,0} & \cdots & I_{5,0} & I_{6,0} \\ I_{0,1} & I_{1,1} & \cdots & I_{5,1} & I_{6,1} \\ \vdots & & \vdots & & \vdots \\ I_{0,n-1} & I_{1,n-1} & \cdots & I_{5,n-1} & I_{6,n-1} \end{bmatrix} \begin{bmatrix} C_{i,0} \\ C_{i,1} \\ C_{i,2} \\ C_{i,3} \\ C_{i,4} \\ C_{i,5} \\ C_{i,6} \end{bmatrix} = \begin{bmatrix} O_{i,0} \\ O_{i,1} \\ \vdots \\ O_{i,n-1} \end{bmatrix}
$$

In Equation 1, the filter coefficients C may be derived by using methods such as the Gauss elimination method, LDL decomposition, or Cholesky decomposition.

For example, when deriving the filter coefficients, the video decoding apparatus may subtract an offset from the input reference samples and output reference samples, and then may use the input reference samples minus the offset and output reference samples minus the offset to derive the filter coefficients. Here, the offset may be the average value of the reference samples, the median value of the reference samples, or a median value determined based on the bit depth. As shown in Equation 2, the video decoding apparatus may additionally derive a filter coefficient $C_7$ for the offset when deriving filter coefficients after subtracting the offset B.

【Equation 2】

$$
\begin{bmatrix} I_{0,0} - B & I_{1,0} - B & \cdots & I_{5,0} - B & I_{6,0} - B & B \\ I_{0,1} - B & I_{1,1} - B & \cdots & I_{5,1} - B & I_{6,1} - B & B \\ \vdots & & \vdots & & \vdots & \vdots \\ I_{0,n-1} - B & I_{1,n-1} - B & \cdots & I_{5,n-1} - B & I_{6,n-1} - B & B \end{bmatrix} \begin{bmatrix} C_{i,0} \\ C_{i,1} \\ C_{i,2} \\ C_{i,3} \\ C_{i,4} \\ C_{i,5} \\ C_{i,6} \\ C_{i,7} \end{bmatrix} = \begin{bmatrix} O_{i,0} - B \\ O_{i,1} - B \\ \vdots \\ O_{i,n-1} - B \end{bmatrix}
$$

In Equation 1 or Equation 2, I and O denote the reconstructed reference samples of the neighboring blocks. Furthermore, in $I_{i,j}$ and $O_{i,j}$, i indicates the position of the input sample and output sample, respectively, and j denotes the index of the matching pair between input and output, which is determined, for example, according to a sliding window method.

The extrapolation performer 1008 applies the determined filter coefficients to the reconstructed reference samples of the current block and predicted samples to perform extrapolation-based intra prediction and thereby generates the prediction block of the current block.

Based on the example in FIG. 12 and the determined filter shape, the video decoding apparatus may multiply the determined filter matrix by a number $M \times N$-$K \times L$ of input samples to generate $K \times L$ predicted samples. At this time, as shown in the examples in FIGS. 13 to 16, the video decoding apparatus may predict regions that are predictable at the same time point in parallel based on their dependencies.

As an example, when filter coefficients are derived with an offset considered, the video decoding apparatus may subtract the offset from the input samples and then applying the filter coefficients to the input samples minus the offset, and thereby generate the final predicted signals. As described above, the offset may be the average value of the reference samples, the median value of the reference samples, or a median value determined based on the bit depth. In this case, the average value may be calculated based on neighboring pre-reconstructed reference samples. For example, by averaging reconstructed reference samples within one or more reference sample lines adjacent to the reference sample region, the video decoding apparatus may calculate the average value of the reference samples.

In some embodiments, clipping may be employed such that the extrapolation output O exists between specific thresholds (i.e., satisfying $TH0 \leq O \leq TH1$). Some embodiment may determine that the threshold TH0 is the minimum value among the neighboring reference samples, and that the threshold TH1 is the maximum value among the neighboring reference samples.

With respect to predicting the current chroma block, when the chroma block's prediction mode is DM mode and the corresponding luma block was predicted by using extrapolation-based intra prediction, the video decoding apparatus may predict the chroma block by using extrapolation-based intra prediction. Alternatively, the chroma block may be predicted by using any intra-prediction mode, e.g., DC, planar mode, or the like. When the current chroma block is predicted by using extrapolation-based intra prediction, the video decoding apparatus may use the filter shape and filter coefficients calculated from the corresponding luma block. Alternatively, after inheriting the filter shape from the corresponding luma block, the video decoding apparatus may derive the filter coefficients based on reconstructed chroma reference samples and may use the derived filter coefficients to predict the current chroma block.

As described above, the video decoding apparatus reconstructs residual signals by inverse transforming the inverse quantized transform coefficients. At this time, when the block being inverse transformed was predicted based on extrapolation-based intra prediction, the video decoding apparatus may determine the inverse transform kernels as follows in determining the primary inverse transform kernel and/or secondary inverse transform kernel. Here, the primary inverse transform kernel may be a separable primary inverse transform kernel or a non-separable primary inverse transform kernel. The secondary inverse transform kernel may be a non-separable secondary inverse transform kernel.

For example, the video decoding apparatus calculates the gradient values of predicted signals generated according to extrapolation-based intra prediction, and then derives the intra-prediction mode of the current block based on the calculated gradient values. For example, the video decoding apparatus generates a Histogram of Oriented Gradients (HoG) based on predicted signals generated according to extrapolation-based intra prediction, and derives an angular prediction mode corresponding to the largest accumulated directionality based on the generated HoG. The video decoding apparatus sets the derived angular prediction mode as the intra-prediction mode of the current block. The video decoding apparatus may determine the inverse transform kernels of the current block based on the set intra-prediction mode.

As another example, the video decoding apparatus may set the intra-prediction mode of the current block to a specific intra-prediction mode, e.g., DC, planar mode, or the like and may determine the inverse transform kernels of the current block based on the set intra-prediction mode. Here, the specific intra-prediction mode may be predetermined based on an agreement between the video encoding apparatus and the video decoding apparatus.

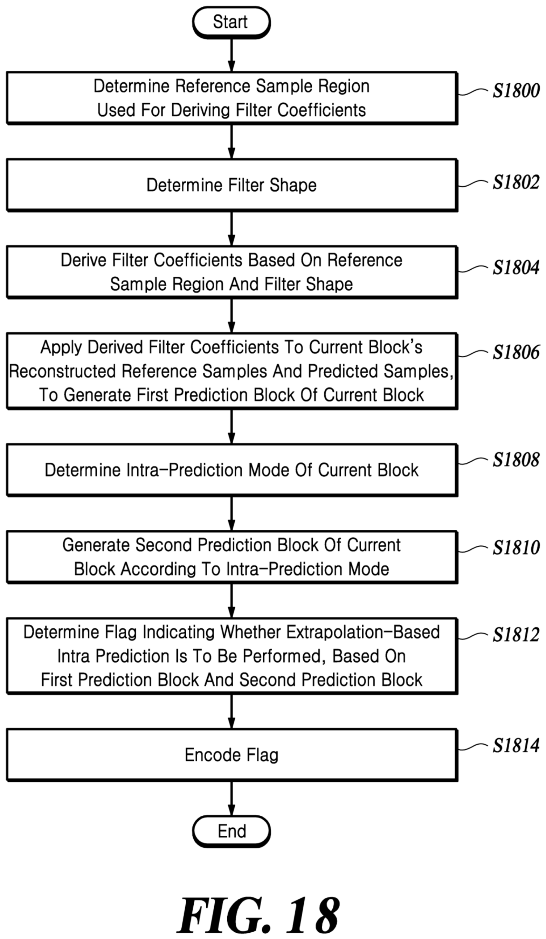

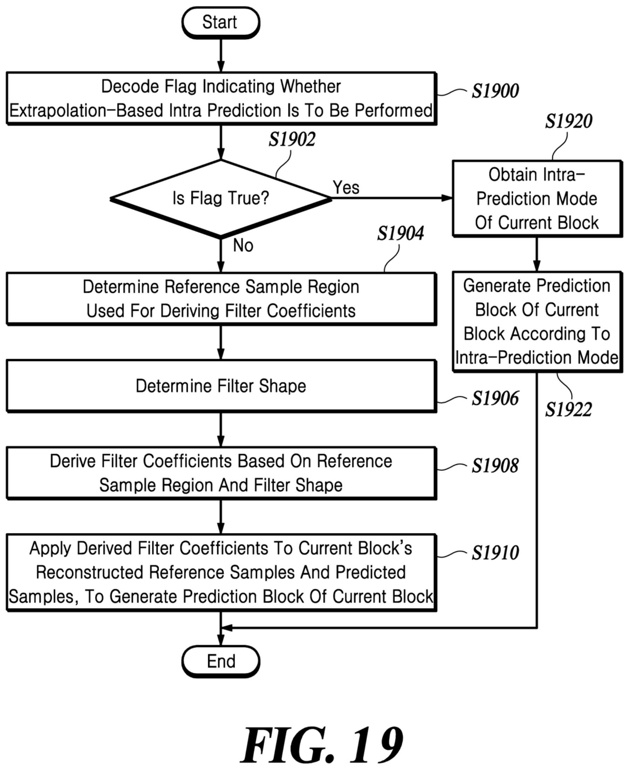

The following describes methods of performing extrapolation-based intra prediction by using the illustrations of FIGS. 18 and 19.

FIG. 18 is a flowchart of a method of encoding the current block by a video encoding apparatus, according to at least one embodiment of the present disclosure.

The video encoding apparatus determines a reference sample region used for deriving filter coefficients when performing extrapolation-based intra prediction (S1800).

Here, the reference sample region includes reconstructed reference samples of the current block. The reference sample region, as illustrated in FIGS. 11A to 11C, is located to the left and top of the current block, to the left of the current block, or to the top of the current block. As illustrated in FIGS. 11A to 11C, the size of the reference sample region is defined based on preset parameter values such as A, B, C, and D, in addition to the width and height of the current block.

The video encoding apparatus may determine whether extrapolation-based intra prediction is to be performed, depending on the aspect ratio of the current block, the size of the current block, the intra-prediction mode of the part or whole of the block containing the reconstructed reference samples, or whether the reference sample region is used.

The video encoding apparatus determines a filter shape used for extrapolation-based intra prediction (S1802). Here, the filter shape is rectangular and includes a prediction pixel region and an input pixel region. The prediction pixel region is a rectangular area having a width and a height, and the input pixel region is located to the left, above, or both to the left and above the prediction pixel region.

As an example, the video encoding apparatus determines an index indicating one of predefined filter shapes. The video encoding apparatus encodes the determined index.

As another example, the video encoding apparatus may determine the filter shape based on the aspect ratio of the current block.

The video encoding apparatus derives filter coefficients based on the reference sample region and the filter shape (S1804).

The video encoding apparatus applies the derived filter coefficients to the reconstructed reference samples of the current block and predicted samples to generate a first prediction block of the current block (S1806).

The video encoding apparatus determines the intra-prediction mode of the current block (S1808). Here, the intra-prediction mode refers to a prediction mode other than the extrapolation-based intra-prediction mode.

The video encoding apparatus generates a second prediction block of the current block according to the intra-prediction mode (S1810).

The video encoding apparatus determines a flag indicating whether extrapolation-based intra prediction is to be performed, based on the first prediction block and the second prediction block (S1812).

In terms of rate distortion optimization, the video encoding apparatus may determine the flag. For example, when the first prediction block is optimal, the flag is set to true. Conversely, when the second prediction block is optimal, the flag is set to false.

The video encoding apparatus encodes the flag (S1814).

The video encoding apparatus takes the value of the flag to subtract the first prediction block or the second prediction block from the current block, thereby generating residual signals of the current block. The video encoding apparatus transforms/quantizes the residual signals to generate quantized transform coefficients and encodes the quantized transform coefficients.

Meanwhile, for transforming residual signals derived from the first prediction block, the video encoding apparatus may determine a primary transform kernel and/or a secondary transform kernel as follows. Here, the primary transform kernel may be a separable primary transform kernel or a non-separable primary transform kernel. The secondary transform kernel may be a non-separable secondary transform kernel. The video encoding apparatus calculates the gradient values of the predicted signals within the first prediction block and derives the intra-prediction mode of the current block based on the calculated gradient values. For example, the video encoding apparatus generates a HoG based on the first predicted signals generated according to extrapolation-based intra prediction and derives the angular prediction mode corresponding to the largest accumulated directionality based on the generated HoG. The video encoding apparatus sets the derived angular prediction mode as the intra-prediction mode of the current block. The video encoding apparatus may determine the transform kernels of the current block based on the set intra-prediction mode.

FIG. 19 is a flowchart of a method of reconstructing the current block by a video decoding apparatus, according to at least one embodiment of the present disclosure.

The video decoding apparatus decodes from the bitstream a flag indicating whether extrapolation-based intra prediction is to be performed (S1900).

The video decoding apparatus decodes the above-described flag based on the aspect ratio of the current block, the size of the current block, the intra-prediction mode of a block portion or the block containing the reconstructed reference samples, or whether a reference sample region is used.

The video decoding apparatus checks the flag (S1902).

If the flag is true (Yes in S1902), the video decoding apparatus performs the following steps.

The video decoding apparatus determines the reference sample region used for deriving filter coefficients (S1904).

Here, the reference sample region includes the reconstructed reference samples of the current block. The reference sample region, as illustrated in FIGS. 11A to 11C, is located at the top and left of the current block, or at the left of the current block, or at the top of the current block. As illustrated in FIGS. 11A to 11C, the size of the reference sample region is defined based on preset parameter values such as A, B, C, and D, in addition to the width and height of the current block.

The video decoding apparatus determines the filter shape used for extrapolation-based intra prediction (S1906). Here, the filter shape is rectangular and includes a prediction pixel region and an input pixel region. The prediction pixel region is a rectangular area having a width and a height, and the input pixel region is located to the left, above, or both to the left and above the prediction pixel region.

As one example, the video decoding apparatus decodes from the bitstream an index that indicates one of predefined filter shapes. The video decoding apparatus determines the filter shape based on the decoded index.

As another example, the video decoding apparatus may determine the filter shape based on the aspect ratio of the current block. For example, when the aspect ratio of the current block is greater than 1, the video decoding apparatus determines a filter shape by the prediction pixel region's aspect ratio of greater than 1. If the aspect ratio of the current block is less than 1, the video decoding apparatus determines a filter shape by the prediction pixel region's aspect ratio of less than 1. When the aspect ratio of the current block is 1, the video decoding apparatus determines the filter shape based on the agreement between the video encoding apparatus and the video decoding apparatus, selecting a filter shape by the prediction pixel region's aspect ratio of either greater than or less than 1. Alternatively, when the aspect ratio of the current block is 1, the video decoding apparatus determines the filter shape by the prediction pixel region's aspect ratio of 1.

The video decoding apparatus derives filter coefficients based on the reference sample region and the filter shape (S1908). The filter coefficients are derived to minimize the cost between the reconstructed reference samples and values generated by multiplying the filter coefficients by the reconstructed reference samples defined according to the filter shape in the reference sample region.

For example, the video decoding apparatus derives a filter matrix that depends on the size of the input pixel region and the size of the prediction pixel region.

In another example, the video decoding apparatus subtracts an offset from the input reference samples and output reference samples defined according to the filter shape in the reference sample region, and then may use the input reference samples minus the offset and output reference samples minus the offset to derive filter coefficients. Here, the offset may be the average value of the reconstructed reference samples, the median value of the reconstructed reference samples, or a median value determined based on the bit depth.

The video decoding apparatus applies the derived filter coefficients to the reconstructed reference samples of the current block and predicted samples to generate the prediction block of the current block (S1910).

The video decoding apparatus applies the filter matrix to the input pixel region and thereby generates predicted samples within the prediction pixel region in parallel based on dependencies.

On the other hand, if the flag is false (No in S1902), the video decoding apparatus performs the following steps.

The video decoding apparatus obtains the intra-prediction mode of the current block (S1920). Here, the intra-prediction mode indicates a prediction mode other than extrapolation-based intra prediction.

The video decoding apparatus generates the prediction block of the current block according to the intra-prediction mode (S1922).

The video decoding apparatus decodes the quantized transform coefficients from the bitstream and inverse quantizes/inverse transforms the quantized transform coefficients to reconstruct the residual signals. The video decoding apparatus sums the prediction block and the residual signals to generate the reconstruction signals of the current block.

Meanwhile, for inverse transform, the video decoding apparatus may determine a primary inverse transform kernel and/or a secondary inverse transform kernel as follows. Here, the primary inverse transform kernel may be a separable primary inverse transform kernel or a non-separable primary inverse transform kernel. The secondary inverse transform kernel may be a non-separable secondary inverse transform kernel. The video decoding apparatus calculates the gradient values of the predicted signals generated according to extrapolation-based intra prediction and derives the intra-prediction mode of the current block based on the calculated gradient values. For example, the video decoding apparatus generates a HoG based on the predicted signals generated according to extrapolation-based intra prediction and derives an angular prediction mode corresponding to the largest accumulated directionality based on the generated HoG. The video decoding apparatus sets the derived angular prediction mode as the intra-prediction mode of the current block. The video decoding apparatus may determine the inverse transform kernels of the current block based on the set intra-prediction mode.

Although the steps in the respective flowcharts are described to be sequentially performed, the steps merely instantiate the technical idea of some embodiments of the present disclosure. Therefore, a person having ordinary skill in the art to which this disclosure pertains could perform the steps by changing the sequences described in the respective drawings or by performing two or more of the steps in parallel. Hence, the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in the present disclosure are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium may include, for example, various types of recording devices in which data is stored in a form readable by a computer system. For example, the non-transitory recording medium may include storage media, such as erasable programmable read-only memory (EPROM), flash drive, optical drive, magnetic hard drive, and solid state drive (SSD) among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

(Reference Numerals)

122: intra predictor
542: intra predictor
902: prediction unit-determiner
904: prediction technique-determiner
906: prediction mode-determiner
908: prediction performer
1002: reference sample region determiner
1004: filter shape determiner
1006: filter coefficient determiner
1008: extrapolation performer

**Claims**

1.  A method for reconstructing a current block by a video decoding apparatus, the method comprising:

    determining a reference sample region used for deriving filter coefficients, the reference sample region including reconstructed reference samples of the current block;
    determining a filter shape used for an extrapolation-based intra prediction, the filter shape being rectangular and including a prediction pixel region and an input pixel region;
    deriving the filter coefficients based on the reference sample region and the filter shape; and
    generating a prediction block of the current block by applying the derived filter coefficients to the reconstructed reference samples of the current block and predicted samples.

2.  The method of claim 1, further comprising:

    decoding from a bitstream a flag that indicates whether an extrapolation-based intra prediction is to be performed, depending on an aspect ratio of the current block, a size of the current block, an intra prediction mode of a part of a block or the block containing the reconstructed reference samples, or whether the reference sample region is to be used; and
    checking the flag,
    wherein, when the flag is true, the method proceeds with decoding the reference sample region.

3.  The method of claim 1, wherein the reference sample region is located at a top side of the current block, or located at a left side of the current block, or located at the left side and the top side of the current block, and the reference sample region has a size defined based on a width of the current block, a height of the current block, and preset parameter values.

4.  The method of claim 1, wherein the prediction pixel region is a rectangular region having a width and a height, and the input pixel region is located at a left side, a top side, or both the left side and the top side of the prediction pixel region.

5.  The method of claim 1, wherein determining the filter shape comprises:
    decoding from a bitstream an index that indicates one of predefined filter shapes, and then determining the filter shape based on the index.

6.  The method of claim 1, wherein determining the filter shape comprises:

    deriving the filter coefficients from a predefined reference sample region for each filter shape among predefined filter shapes;
    generating predicted signals of the current block, which correspond to each filter shape and the filter coefficients in the predefined reference sample region; and
    selecting a filter shape that minimizes a cost between reconstructed samples corresponding to the predicted signals of the current block and the predicted signals of the current block.

7.  The method of claim 1, wherein determining the filter shape comprises:

    determining that the filter shape is a shape of the prediction pixel region with an aspect ratio greater than 1 when the current block has an aspect ratio greater than 1; and

determining that the filter shape is a shape of the prediction pixel region with an aspect ratio smaller than 1 when the current block has an aspect ratio smaller than 1.

8. The method of claim 1, wherein determining the filter shape comprises:

   determining that the filter shape is a shape of the prediction pixel region with an aspect ratio of 1 when the current block has an aspect ratio of 1.

9. The method of claim 1, wherein deriving the filter coefficients comprises:
   deriving the filter coefficients so as to minimize a cost between the reconstructed reference samples and values generated by multiplying the filter coefficients by the reconstructed reference samples defined according to the filter shape in the reference sample region.

10. The method of claim 1, wherein deriving the filter coefficients comprises:
    deriving a filter matrix that depends on a size of the input pixel region and a size of the prediction pixel region.

11. The method of claim 10, wherein generating the prediction block of the current block comprises:
    generating predicted samples in the prediction pixel region in parallel based on dependencies by applying the filter matrix to the input pixel region.

12. The method of claim 1, wherein deriving the filter coefficients comprises:

    subtracting an offset from input reference samples and output reference samples defined according to the filter shape in the reference sample region, and then deriving the filter coefficients by using the input reference samples subtracted by the offset and the output reference samples subtracted by the offset,
    wherein the offset is a mean value of the reconstructed reference samples, a median value of the reconstructed reference samples, or a median value determined based on a bit depth.

13. The method of claim 1, further comprising:

    generating a Histogram of Oriented Gradient (HoG) based on predicted signals within the prediction block and deriving an angular prediction mode corresponding to a largest accumulated directionality based on the HoG;
    setting the derived angular prediction mode as an intra-prediction mode of the current block; and
    determining inverse transform kernels of the current block based on the set intra-prediction mode.

14. A method for encoding a current block by a video encoding apparatus, the method comprising:

    determining a reference sample region used for deriving filter coefficients, the reference sample region including reconstructed reference samples of the current block;
    determining a filter shape used for an extrapolation-based intra prediction, the filter shape being rectangular and including a prediction pixel region and an input pixel region;
    deriving the filter coefficients based on the reference sample region and the filter shape; and
    generating a first prediction block of the current block by applying the derived filter coefficients to the reconstructed reference samples of the current block and predicted samples.

15. The method of claim 14, wherein determining the reference sample region is dependent on an aspect ratio of the current block, a size of the current block, an intra prediction mode of a part of a block or the block containing the reconstructed reference samples, or whether the reference sample region is to be used.

16. The method of claim 14, further comprising:

    determining an intra-prediction mode of the current block, the intra-prediction mode representing a prediction mode other than an extrapolation-based intra-prediction mode; and
    generating a second prediction block of the current block according to the intra-prediction mode.

17. The method of claim 16, further comprising:

    determining a flag that indicates whether the extrapolation-based intra prediction is to be performed, based on the first prediction block and the second prediction block; and
encoding the flag.

18. The method of claim 14, further comprising:

generating a Histogram of Oriented Gradient (HoG) based on predicted signals within the prediction block and deriving an angular prediction mode corresponding to a largest accumulated directionality based on the HoG;
setting the derived angular prediction mode as an intra-prediction mode of the current block; and
determining transform kernels of the current block based on the set intra-prediction mode.

19. A method for providing video data to a video decoding apparatus, the method comprising:

encoding the video data into a bitstream; and
transmitting the bitstream to the video decoding apparatus,
wherein the encoding of the video data comprises:

determining a reference sample region used for deriving filter coefficients, the reference sample region including reconstructed reference samples of a current block;
determining a filter shape used for an extrapolation-based intra prediction, the filter shape being rectangular and including a prediction pixel region and an input pixel region;
deriving the filter coefficients based on the reference sample region and the filter shape; and
generating a prediction block of the current block by applying the derived filter coefficients to the reconstructed reference samples of the current block and predicted samples.

20. The method of claim 19, wherein encoding the video data further comprises:

generating a Histogram of Oriented Gradient (HoG) based on predicted signals within the prediction block and deriving an angular prediction mode corresponding to a largest accumulated directionality based on the HoG;
setting the derived angular prediction mode as an intra-prediction mode of the current block; and
determining transform kernels of the current block based on the set intra-prediction mode.

**FIG. 1**

EP 4 697 721 A1

**FIG. 2**

FIG. 3A

0 : Planar
1 : DC

## FIG. 3B

B2    B0  B1

A0

A1

## FIG. 4

**FIG. 5**

Reconstructed Region

Current
Block

Reconstructed Region

Current
Block

Reconstructed Region

Current
Block

# FIG. 6

EIP's Input          EIP's Output

# FIG. 7

**FIG. 8**

FIG. 9

FIG. 10

First Region

# FIG. 11A

Second Region

# FIG. 11B

Third Region

B        W                    C

A

Current Block

# FIG. 11C

M

N        L

K

☐ Input Pixel Region    ▨ Prediction Pixel Region

# FIG. 12

| Filter Shape | |
|---|---|
| Reconstruction Order | |

**FIG. 13**

| Filter Shape | |
|---|---|
| Reconstruction Order | |

**FIG. 14**

| Filter Shape | Reconstruction Order |
|---|---|

**FIG. 15**

| | | |
|---|---|---|
| Filter Shape | | |
| Reconstruction Order | 1 1 1 1 / 1 1 1 1 / 2 2 2 2 / 2 2 2 2 | 1 1 2 2 / 1 1 2 2 / 1 1 2 2 / 1 1 2 2 |
| | 1 1 1 1 2 2 2 2 / 1 1 1 1 2 2 2 2 / 2 2 2 2 3 3 3 3 / 2 2 2 2 3 3 3 3 / 3 3 3 3 4 4 4 4 / 3 3 3 3 4 4 4 4 / 4 4 4 4 5 5 5 5 / 4 4 4 4 5 5 5 5 | 1 1 2 2 3 3 4 4 / 1 1 2 2 3 3 4 4 / 1 1 2 2 3 3 4 4 / 1 1 2 2 3 3 4 4 / 2 2 3 3 4 4 5 5 / 2 2 3 3 4 4 5 5 / 2 2 3 3 4 4 5 5 / 2 2 3 3 4 4 5 5 |

## FIG. 16

| $I_0$ | $I_1$ | $I_2$ | $I_3$ | $I_4$ |
|---|---|---|---|---|
| $I_5$ | $O_0$ | $O_1$ | $O_2$ | $O_3$ |
| $I_6$ | $O_4$ | $O_5$ | $O_6$ | $O_7$ |

## FIG. 17

```
                        ┌─────────┐
                        │  Start  │
                        └─────────┘
                             │
                             ▼
        ┌──────────────────────────────────────┐
        │   Determine Reference Sample Region   │─── S1800
        │   Used For Deriving Filter Coefficients│
        └──────────────────────────────────────┘
                             │
                             ▼
        ┌──────────────────────────────────────┐
        │        Determine Filter Shape         │─── S1802
        └──────────────────────────────────────┘
                             │
                             ▼
        ┌──────────────────────────────────────┐
        │   Derive Filter Coefficients Based On Reference │─── S1804
        │      Sample Region And Filter Shape   │
        └──────────────────────────────────────┘
                             │
                             ▼
        ┌──────────────────────────────────────┐
        │  Apply Derived Filter Coefficients To Current Block's │─── S1806
        │ Reconstructed Reference Samples And Predicted Samples, │
        │  To Generate First Prediction Block Of Current Block │
        └──────────────────────────────────────┘
                             │
                             ▼
        ┌──────────────────────────────────────┐
        │ Determine Intra−Prediction Mode Of Current Block │─── S1808
        └──────────────────────────────────────┘
                             │
                             ▼
        ┌──────────────────────────────────────┐
        │   Generate Second Prediction Block Of Current │─── S1810
        │    Block According To Intra−Prediction Mode │
        └──────────────────────────────────────┘
                             │
                             ▼
        ┌──────────────────────────────────────┐
        │ Determine Flag Indicating Whether Extrapolation−Based │─── S1812
        │   Intra Prediction Is To Be Performed, Based On │
        │   First Prediction Block And Second Prediction Block │
        └──────────────────────────────────────┘
                             │
                             ▼
        ┌──────────────────────────────────────┐
        │              Encode Flag              │─── S1814
        └──────────────────────────────────────┘
                             │
                             ▼
                        ┌─────────┐
                        │   End   │
                        └─────────┘
```

# FIG. 18

Start

Decode Flag Indicating Whether
Extrapolation−Based Intra Prediction Is To Be Performed — *S1900*

*S1920*

*S1902*

Is Flag True? — Yes → Obtain Intra−
Prediction Mode
Of Current Block

No

*S1904*

Determine Reference Sample Region
Used For Deriving Filter Coefficients

Generate Prediction
Block Of Current
Block According To
Intra−Prediction Mode

Determine Filter Shape — *S1906*

*S1922*

Derive Filter Coefficients Based On Reference
Sample Region And Filter Shape — *S1908*

Apply Derived Filter Coefficients To Current Block's
Reconstructed Reference Samples And Predicted
Samples, To Generate Prediction Block Of Current Block — *S1910*

End

# FIG. 19

## INTERNATIONAL SEARCH REPORT

| International application No. |
| --- |
| **PCT/KR2024/005216** |

### A. CLASSIFICATION OF SUBJECT MATTER

**H04N 19/59**(2014.01)i; **H04N 19/593**(2014.01)i; **H04N 19/105**(2014.01)i; **H04N 19/117**(2014.01)i; **H04N 19/176**(2014.01)i; **H04N 19/132**(2014.01)i; **H04N 19/196**(2014.01)i; **H04N 19/11**(2014.01)i; **H04N 19/12**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/59(2014.01); H04N 19/10(2014.01); H04N 19/105(2014.01); H04N 19/11(2014.01); H04N 19/117(2014.01); H04N 19/44(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 외삽 기반 인트라 예측(extrapolation based intra prediction), 필터(filter), 계수(coefficient), 형태(shape)

### C. DOCUMENTS CONSIDERED TO BE RELEVANT

| Category* | Citation of document, with indication, where appropriate, of the relevant passages | Relevant to claim No. |
| --- | --- | --- |
| X <br> Y | XU, Luhang et al. Non-EE2: An extrapolation filter-based intra prediction mode. JVET-AD0081-v3, Joint Video Experts Team (JVET) of ITU-T SG WP 3 and ISO/IEC JTC 1/SC 29/WG 11, 30th Meeting: Antalya, TR. 22 April 2023. <br> See pages 1-3. | 1-12,14-15,19 <br> 13,16-18,20 |
| Y | KR 10-2023-0058166 A (TENCENT AMERICA LLC) 02 May 2023 (2023-05-02) <br> See paragraphs [0120]-[0125]; claims 1-4; and figure 10. | 13,16-18,20 |
| A | KR 10-2018-0001479 A (KT CORPORATION) 04 January 2018 (2018-01-04) <br> See paragraphs [0144]-[0149]; and figure 10. | 1-20 |
| A | KR 10-2019-0106804 A (ELECTRONICS AND TELECOMMUNICATIONS RESEARCH INSTITUTE) 18 September 2019 (2019-09-18) <br> See paragraphs [0451]-[0462]; and figure 9. | 1-20 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 August 2024** | **09 August 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/005216** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-2020-0028860 A (KIM, Ki Baek) 17 March 2020 (2020-03-17)<br>    See claims 1-7. | 1-20 |

Form PCT/ISA/210 (second sheet) (July 2022)

**INTERNATIONAL SEARCH REPORT**
Information on patent family members

International application No.

**PCT/KR2024/005216**

| Patent document cited in search report | | | Publication date (day/month/year) | Patent family member(s) | | | Publication date (day/month/year) |
|---|---|---|---|---|---|---|---|
| KR | 10-2023-0058166 | A | 02 May 2023 | EP | 4189963 | A1 | 07 June 2023 |
| | | | | JP | 2023-547170 | A | 09 November 2023 |
| | | | | US | 2023-0049154 | A1 | 16 February 2023 |
| | | | | WO | 2023-015163 | A1 | 09 February 2023 |
| KR | 10-2018-0001479 | A | 04 January 2018 | CN | 109417628 | A | 01 March 2019 |
| | | | | CN | 109417628 | B | 08 March 2022 |
| | | | | EP | 3477951 | A1 | 01 May 2019 |
| | | | | EP | 3477951 | B1 | 08 December 2021 |
| | | | | KR | 10-2410032 | B1 | 16 June 2022 |
| | | | | US | 10735720 | B2 | 04 August 2020 |
| | | | | US | 2019-0238835 | A1 | 01 August 2019 |
| | | | | WO | 2017-222326 | A1 | 28 December 2017 |
| KR | 10-2019-0106804 | A | 18 September 2019 | CN | 111837388 | A | 27 October 2020 |
| | | | | CN | 111837388 | B | 14 April 2023 |
| | | | | EP | 3764645 | A1 | 13 January 2021 |
| | | | | US | 11323705 | B2 | 03 May 2022 |
| | | | | US | 2021-0021818 | A1 | 21 January 2021 |
| | | | | WO | 2019-172705 | A1 | 12 September 2019 |
| KR | 10-2020-0028860 | A | 17 March 2020 | CN | 112740675 | A | 30 April 2021 |
| | | | | EP | 3849183 | A1 | 14 July 2021 |
| | | | | JP | 2021-536717 | A | 27 December 2021 |
| | | | | US | 11917195 | B2 | 27 February 2024 |
| | | | | US | 2021-0195239 | A1 | 24 June 2021 |
| | | | | WO | 2020-050685 | A1 | 12 March 2020 |

Form PCT/ISA/210 (patent family annex) (July 2022)